# EUROPÄISCHE PATENTSCHRIFT

(11) **EP 1 616 738 B1**
(45) Veröffentlichungstag und Bekanntmachung des Hinweises auf die Patenterteilung: **04.07.2007**
(21) Anmeldenummer: 05011591.4
(22) Anmeldetag: 30.05.2005
(51) Int. Cl.: B60J 7/043

(54) **Schiebedachsystem für ein Kraftfahrzeug**
Vehicle sliding roof system
Construction de toit coulissant pour véhicule automobile

(30) Priorität: 16.07.2004 DE 102004034463
(43) Veröffentlichungstag der Anmeldung: 18.01.2006
(73) Patentinhaber: ArvinMeritor GmbH, 63128 Dietzenbach (DE)
(72) Erfinder: Biewer, Christian, 64839 Altheim (DE); Böhm, Horst, 60599 Frankfurt/Main (DE); Grimm, Rainer, 60599 Frankfurt (DE); Röder, Joachim, 63165 Mühlheim (DE)
(74) Vertreter: Sties, Jochen

(56) Entgegenhaltungen:
- EP-A- 1 359 037
- DE-A1- 3 715 268
- DE-U1-6202004 001 91
- US-A- 5 447 355
- US-A1- 2003 075 956

## Beschreibung

Die Erfindung betrifft ein Schiebedachsystem für ein Kraftfahrzeug, mit mindestens einer Führungsschiene, mindestens einem Führungsschlitten, der in der Führungsschiene verschiebbar aufgenommen ist, und einem Deckelhalter, der relativ zur Führungsschiene verstellbar ist.

Schiebedachsysteme sind allgemein bekannt. Sie dienen dazu, einen am Deckelhalter angebrachten Deckel (bestehend beispielsweise aus Blech, Kunststoff oder Glas) zwischen einer geschlossenen und einer geöffneten Stellung zu verstellen. In der geschlossenen Stellung wird eine Öffnung in einem Fahrzeugdach verschlossen. In der geöffneten Stellung des Deckels wird diese Öffnung mehr oder weniger freigegeben.

Die DE 37 15 268 A1 zeigt ein Schiebedachsystem mit einem ersten und einem zweiten Schlitten, wobei ein Deckelhalter mittels eines Schwenklagers und einer Verbindungsstange mit dem ersten Schlitten und mittels einer Kulissenführung mit dem zweiten Schlitten verbunden ist.

Alle bekannten Schiebedachsysteme haben das Problem, daß der Deckel mit hoher Genauigkeit geführt werden muß. Zum einen dürfen die unvermeidbaren Herstellungstoleranzen nicht dazu führen, daß das gesamte System sehr schwergängig wird oder sich gar verklemmt. Zum anderen dürfen die Herstellungstoleranzen und der über lange Betriebsdauern unvermeidbare Verschleiß nicht dazu führen, daß die verschiedenen Bauteile so viel Spiel bekommen, daß das Schiebedachsystem zu klappern beginnt. Dies führt zu recht komplexen und teuren Bauteilen.

Die Aufgabe der Erfindung besteht darin, ein Schiebedachsystem der eingangs genannten Art dahingehend weiter zu bilden, daß der Deckel mit einer sehr hohen Genauigkeit auch über eine lange Betriebsdauer geführt werden kann und einfach ausgeführte Bauteile verwendet werden können.

Erfindungsgemäß ist zu diesem Zweck bei einem Schiebedachsystem der eingangs genannten Art vorgesehen, daß der Deckelhalter durch zwei Kulissenführungen mit den Führungsschlitten und durch eine Kulissenführung mit der Führungsschiene verbunden ist. Auf diese Weise ist eine mechanisch überbestimmte Drei-Punkt-Lagerung geschaffen, die aufgrund der gewollten Überbestimmtheit für eine besonders präzise Positionierung des Deckelhalters und damit auch des Deckels sorgt. Der Führungsschlitten kann vollständig aus Kunststoff bestehen, so daß er in einfacher Weise hergestellt werden kann.

Gemäß einer bevorzugten Ausführungsform der Erfindung ist vorgesehen, daß der Führungsschlitten zwei Teile aufweist, die im wesentlichen spiegelsymmetrisch sind und zwischen sich den Deckelhalter aufnehmen. Auf diese Weise sind die Führungskulissen, welche den Deckelhalter mit dem Führungsschlitten verbinden, fast vollständig im Inneren des Führungsschlittens aufgenommen, was eine besonders hohe Belastbarkeit in vertikaler Richtung zur Folge hat, also gegen Belastungen, die den Deckel vom Innenraum des Fahrzeugs weg nach außen zu drücken versuchen.

Gemäß der bevorzugten Ausführungsform der Erfindung ist auch vorgesehen, daß die Führungsschiene einen Führungssteg aufweist, der in eine Führungsnut eingreift, die in der Führungsschiene vorgesehen ist. Dies verringert die Anforderungen an die Toleranzen, die von den an der Führung des Führungsschlittens beteiligten Bauteilen einzuhalten sind.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine perspektivische Ansicht mit einem Schiebedachsystem;
- Figur 2eine perspektivische Ansicht des Führungsschlittens und des darin aufgenommenen Deckelhalters eines erfindungsgemäßen Schiebedachsystems;
- Figur 3die Baugruppe von Figur 2, wobei eine Hälfte des Führungsschlittens abgenommen wurde;

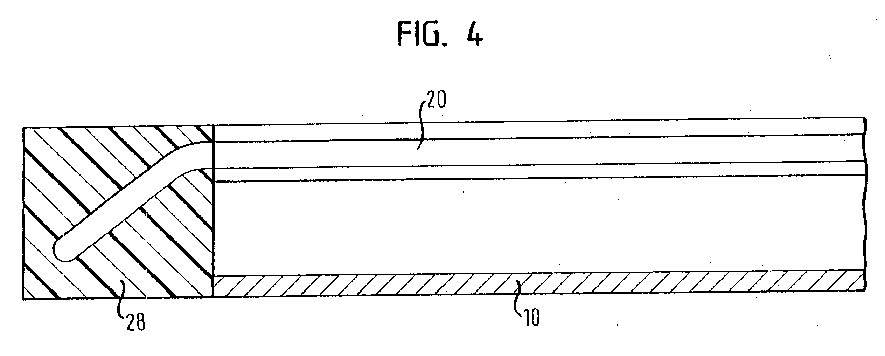

- Figur 4eine abgebrochene Schnittansicht einer Führungsschiene für das erfindungsgemäße Schiebedachsystem; und
- Figur 5schematisch einen Schnitt entlang der Ebene V-V von Figur 3

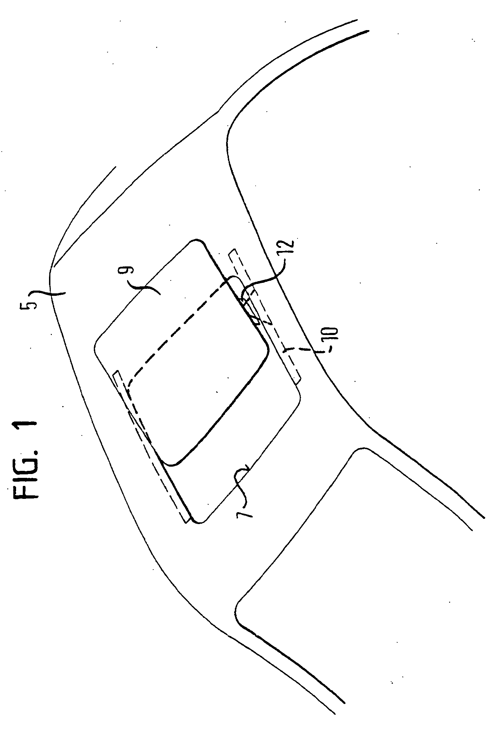

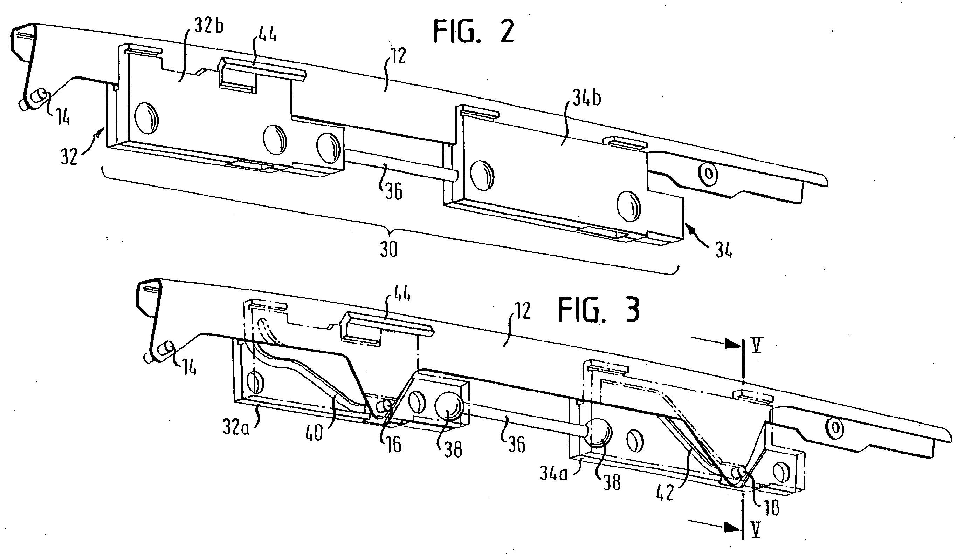

In Figur 1 ist schematisch ein Fahrzeugdach 5 gezeigt, welches mit einer Öffnung 7 für einen verstellbaren Deckel 9 eines Schiebedachsystems verschlossen werden kann. Entlang den Längsrändern der Öffnung 7 erstrecken sich zwei Führungsschienen 10, die jeweils zur Führung eines Deckelhalters 12 (siehe auch die Figuren 2 und 3) dienen, an denen der Deckel 9 angebracht ist.

Jeder Deckelhalter 12 ist ein Biegeteil aus Metall und ist mit drei Führungsstiften 14, 16, 18 versehen, die jeweils in einen Halteabschnitt eingesetzt sind, die auf der vom Deckel 9 abgewandten Seite vorstehen. Der Führungsstift 14 befindet sich bezogen auf die Fahrtrichtung des Fahrzeugs vorne, während der Führungsstift 18 hinten angeordnet ist.

Die Führungsschiene 10 ist ein Metall-Profilteil, beispielsweise aus einer extrudierten Aluminiumlegierung, und hat einen wannenartigen Querschnitt. In ihr ist der Deckelhalter 12 aufgenommen, der sich von oben in sie herein erstreckt. Die Führungsschiene 10 weist im oberen Abschnitt zwei einander gegenüberliegende Führungskulissen 20 auf, die jeweils gebildet sind zwischen einem oberen Steg 22 und einem Mittelsteg 24 auf den Seitenwänden 26 der Führungsschiene 10. Die beiden Führungskulissen 20 erstrecken sich geradlinig entlang der Führungsschiene 10 mit Ausnahme ihres vordersten Abschnittes. Dieser ist in einem Ansatzteil 28 ausgeführt, welches aus Kunststoff besteht und an die Führungsschiene 10 angesetzt ist. In diesem Ansatzteil erstreckt sich die Führungskulisse 20 schräg nach unten.

In die Führungskulisse 20 greift der vorderste Führungsstift 14 ein. Wenn sich der Deckel in seiner geschlossenen Stellung befindet, befindet sich der Führungsstift 14 am vorderen unteren Ende der Führungskulisse 20 im Ansatzteil 28. Die beiden anderen Führungsstifte 16, 18 sind in einem Führungsschlitten 30 angeordnet, der hier durch einen vorderen Schlitten 32 und einen hinteren Schlitten 34 gebildet ist. Der vordere Schlitten 32 und der hintere Schlitten 34 sind gelenkig miteinander durch eine Verbindungsstange 36 verbunden, die an jedem Ende einen Kugelkopf 38 aufweist. Dieser ist drehbar im entsprechenden Schlitten aufgenommen.

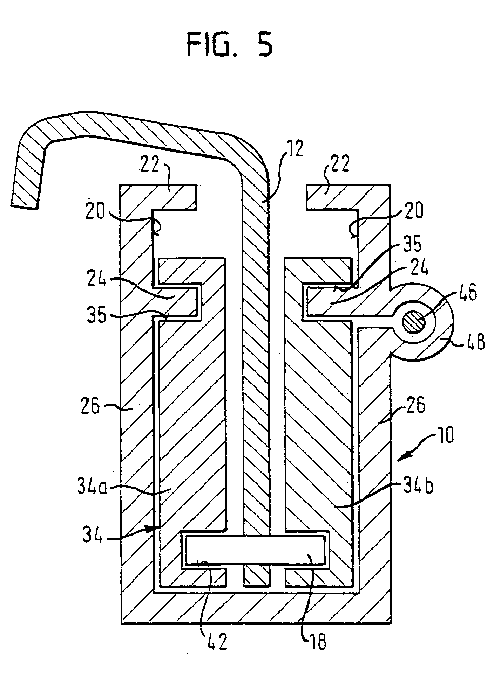

Jeder der beiden Schlitten 32, 34 ist aus zwei Teilen gebildet, die zueinander etwa spiegelsymmetrisch sind. Dies ist in Figur 5 zu sehen. Zum besseren Verständnis werden die beiden Teile jedes Schlittens mit den Bezugszeichen a oder b bezeichnet. Jedes Teil 32a, 32b, 34a, 34b der beiden Schlitten 32, 34 ist auf seiner Außenseite mit einer Führungsnut 35 versehen, die auf dem Mittelsteg 24 der Seitenwände 26 der Führungsschiene 10 gleitet. Der Mittelsteg wirkt daher als Führungssteg für die Schlitten.

Der vordere Schlitten 32 wirkt mit dem mittleren Führungsstift 16 zusammen. In dem Schlitten 32 ist eine Führungskulisse 40 vorgesehen, die in Figur 3 von rechts nach links betrachtet zuerst unten waagrecht verläuft, dann schräg nach links oben ansteigt, dann kurz auf einem Plateau verharrt und dann in einem Bogen weiter nach oben links ansteigt. Im gegenüberliegenden Teil 32b des Schlittens 32 ist die Führungskulisse spiegelbildlich ausgeführt.

Im hinteren Schlitten 34 ist eine weitere Führungskulisse 42 vorgesehen. In diese verläuft, wiederum von links nach rechts betrachtet, zuerst auf einem unteren Niveau waagrecht und steigt dann schräg nach links oben auf ein oberes Niveau an. Auch hier ist im gegenüberliegenden Teil 34b des Schlittens 34 die Führungskulisse 42 spiegelbildlich ausgeführt.

Am Teil 32b des Schlittens 32 ist ein Mitnehmer 44 angebracht, an dem ein Kabel 46 (siehe Figur 5) angreift, welches in einem Kabelkanal 48 angeordnet ist. Das Kabel 46 kann von einem (nicht dargestellten) Motor betätigt werden, so daß der Mitnehmer 44 und dadurch der Schlitten 32 und der Schlitten 34 zusammen in der Führungsschiene 10 verschoben werden. Durch Verschieben des aus den Schlitten 32 und 34 gebildeten Führungsschlittens 30 relativ zum Deckelhalter 12 sorgen die von den Führungskulissen 20, 40, 42 zusammen mit den zugehörigen Führungsstiften 14, 16, 18 gebildeten Kulissenführungen für die gewünschte Bewegung des Deckelhalters 12. Dabei ergibt sich bei den Kulissenführungen 16, 40 und 18, 42 die Reibpaarung Metall/Kunststoff, die sowohl hinsichtlich der auftretenden Reibung als auch hinsichtlich der Kompensation von eventuellen Toleranzen vorteilhaft ist.

In der Ausgangsstellung, also bei geschlossenem Deckel, befindet sich der Führungsschlitten 30 relativ zum Deckelhalter 12 in der in den Figuren 2 und 3 gezeigten Stellung. Der vordere Führungsstift 14 befindet sich am vorderen, unteren Abschnitt der Führungskulisse 20.

Wenn der Deckel geöffnet werden soll, wird der Führungsschlitten 30 in der Führungsschiene 10, bezogen auf das Fahrzeug, nach hinten verschoben, also bezüglich der Figuren 2 und 3 nach rechts. Dieser Bewegung kann der Deckelhalter 12 nicht folgen, da der vordere Abschnitt der Führungskulisse 20 geneigt verläuft und nicht waagrecht nach hinten. Dadurch werden die Führungsstifte 16, 18 von den Führungskulissen 40, 42 nach oben angehoben, bis der Deckelhalter 12 die sogenannte Lüfterstellung erreicht. In der Lüfterstellung ist der hintere Rand des Deckels 9 angehoben, so daß ein Spalt zwischen der Oberfläche des Fahrzeugdaches 5 und der Hinterkante des Deckels 9 gebildet ist. In der Lüfterstellung befindet sich der vordere Führungszapfen 16 auf dem Plateau der Führungskulisse 40, während sich der Führungsstift 18 bereits im oberen, waagrechten Abschnitt der Führungskulisse 42 befindet. Wenn der Deckel 9 aus der Lüfterstellung in eine nach hinten verschobene Stellung überführt werden soll, wie sie beispielsweise in Figur 1 gezeigt ist, wird der Führungsschlitten 30 weiter nach hinten verschoben. Dabei hebt der obere, gekrümmt verlaufende Abschnitt der Führungskulisse 40 den Führungsstift 16 weiter an, wodurch der Führungsstift 14 in den waagrecht verlaufenden Abschnitt der Führungskulisse 20 eintritt. Der Deckelhalter 12 kann zusammen mit dem Deckel 9 dann waagrecht nach hinten in der Führungsschiene 10 verschoben werden. Zum Schließen des Deckels wird der Führungsschlitten 30 wieder in der entgegengesetzten Richtung nach vorne verschoben.

Das beschriebene Schiebedachsystem gewährleistet eine sehr präzise Führung und Positionierung des Deckelhalters 12, da dieser mit den drei Führungsstiften 14, 16, 18 statisch überbestimmt in der Führungsschiene 10 geführt wird. Außerdem ergibt sich eine hohe Belastbarkeit der Deckelhalter 12 in vertikaler Richtung, da dieser über die Führungsstifte 14, 16, 18 sowie die Führungskulisse 20 bzw. die Schlitten 32, 34 im Inneren der Führungsschiene 10 gekapselt aufgenommen ist. Eventuelle Kräfte in vertikaler Richtung führen zu keinen Kippkräften, sondern werden symmetrisch aufgenommen. Schließlich werden die Schlitten 32, 34 sehr präzise über die Mittelstege 24 der Führungsschiene 10 geführt. Die Mittelstege 24 dienen allein zur Führung und Positionierung der Schlitten 32, 34, so daß die Toleranzen von anderen Bauteilen, beispielsweise dem Boden der Führungsschiene 10, keinen Einfluß haben. Die Mittelstege 24 können mit hoher Genauigkeit beim Extrudieren der Führungsschiene ausgebildet werden. Auch die Tatsache, daß der Deckelhalter 12 unmittelbar, also ohne Zwischenhebel, Übersetzungshebel oder andere Mechanismen, in den Führungsschlitten aufgenommen ist, sorgt für eine hohe Genauigkeit.

### Bezugszeichenliste

- 5: Fahrzeugdach
- 7: Öffnung
- 9: Deckel
- 10: Führungsschiene
- 12: Deckelhalter
- 14: Führungsstift
- 16: Führungsstift
- 18: Führungsstift
- 20: Führungskulisse
- 22: oberer Steg
- 24: Mittelsteg
- 26: Seitenwand
- 28: Ansatzteil
- 30: Führungsschlitten
- 32: vorderer Schlitten
- 34: hinterer Schlitten
- 35: Führungsnut
- 36: Verbindungsstange
- 38: Kugelkopf
- 40: Führungskulisse
- 42: Führungskulisse
- 44: Mitnehmer
- 46: Kabel
- 48: Kabelkanal

## Patentansprüche

1. Schiebedachsystem für ein Kraftfahrzeug, mit mindestens einer Führungsschiene (10), mindestens einem Führungsschlitten (30), der in der Führungsschiene (10) verschiebbar aufgenommen ist, und einem Deckelhalter (12), der relativ zur Führungsschiene verstellbar ist, **dadurch gekennzeichnet, daß** der Deckelhalter durch zwei Kulissenführungen (16, 40; 18, 42) mit dem Führungsschlitten (30) und durch eine Kulissenführung (14, 20) mit der Führungsschiene (10) verbunden ist.

2. Schiebedachsystem nach Anspruch 1, **dadurch gekennzeichnet, daß** die Kulissenführungen jeweils gebildet sind durch einen Führungsstift (14, 16, 18), der am Deckelhalter (12) angebracht ist, und durch eine Führungskulisse (20, 40, 42), die am Führungsschlitten (30) bzw. an der Führungsschiene (10) angebracht ist.

3. Schiebedachsystem nach einem der vorhergehenden Ansprüche, **dadurch gekennzeichnet, daß** der Führungsschlitten (30) durch einen vorderen Schlitten (32) und einen hinteren Schlitten (34) gebildet ist.

4. Schiebedachsystem nach Anspruch 3, **dadurch gekennzeichnet, daß** der vordere und der hintere Schlitten (32, 34) gelenkig miteinander verbunden sind.

5. Schiebedachsystem nach einem der vorhergehenden Ansprüche, **dadurch gekennzeichnet, daß** der Führungsschlitten zwei Teile (32a, 32b, 34a, 34b) aufweist, die im wesentlichen spiegelsymmetrisch sind und zwischen sich den Deckelhalter (12) aufnehmen.

6. Schiebedachsystem nach einem der vorhergehenden Ansprüche, **dadurch gekennzeichnet, daß** die Führungsschiene (10) einen Führungssteg (24) aufweist, der in eine Führungsnut (35) eingreift, die im Führungsschlitten (30) vorgesehen ist.

## Claims

1. A sliding roof system for a motor vehicle, comprising at least one guide rail (10), at least one guide carriage (30) movably received in the guide rail (10), and a cover support (12) that can be shifted relative to the guide rail, **characterized in that** the cover support is connected with the guide carriage (30) by means of two slotted guides (16, 40; 18, 42) and with the guide rail (10) by means of one slotted guide (14, 20).

2. The sliding roof system according to claim 1, **characterized in that** the slotted guides are each formed by a guide pin (14, 16, 18) mounted on the cover support (12), and by a guide slot (20, 40, 42) provided on the guide carriage (30) and on the guide rail (10), respectively.

3. The sliding roof system according to either of the preceding claims, **characterized in that** the guide carriage (30) is formed by a front carriage (32) and a rear carriage (34).

4. The sliding roof system according to claim 3, **characterized in that** the front and rear carriages (32, 34) are connected with each other by an articulation.

5. The sliding roof system according to any of the preceding claims, **characterized in that** the guide carriage has two parts (32a, 32b, 34a, 34b) which are substantially mirror-inverted and receive the cover support (12) between them.

6. The sliding roof system according to any of the preceding claims, **characterized in that** the guide rail (10) has a guide web (24) which engages into a guide groove (35) provided in the guide carriage (30).

## Revendications

1. Système de toit ouvrant pour un véhicule automobile, comportant au moins un rail de guidage (10), au moins un chariot de guidage (30) qui est reçu dans le rail de guidage (10) de manière à pouvoir se déplacer, et un porte-couvercle (12) qui est mobile par rapport au rail de guidage, **caractérisé en ce que** le porte-couvercle est relié au chariot (30) par deux guides à coulisse (16, 40 ; 18, 42) et au rail de guidage (10) par un guide à coulisse (14, 20).

2. Système de toit ouvrant selon la revendication 1, **caractérisé en ce que** les guides à coulisse sont chacun formés par une goupille de guidage (14, 16, 18) qui est montée sur le porte-couvercle (12) et par une coulisse de guidage (20, 40, 42) qui est montée sur le chariot de guidage (30) et sur le rail de guidage (10), respectivement.

3. Système de toit ouvrant selon l'une des revendications précédentes, **caractérisé en ce que** le chariot de guidage (30) est formé par un chariot avant (32) et par un chariot arrière (34).

4. Système de toit ouvrant selon la revendication 3, **caractérisé en ce que** les chariots avant et arrière (32, 34) sont reliés l'un à l'autre de manière articulée.

5. Système de toit ouvrant selon l'une des revendications précédentes, **caractérisé en ce que** le chariot de guidage présente deux parties (32a, 32b, 34a, 34b) qui sont sensiblement symétriques et qui reçoivent entre elles le porte-couvercle (12).

6. Système de toit ouvrant selon l'une des revendications précédentes, **caractérisé en ce que** le rail de guidage (10) présente une barrette de guidage (24) qui s'engage dans une gorge de guidage (35) qui est prévue dans le chariot de guidage (30).
